# EUROPEAN PATENT SPECIFICATION

(11) **EP 0 547 998 B1**
(45) Date of publication and mention of the grant of the patent: **21.02.1996**
(21) Application number: 92500166.1
(22) Date of filing: 14.12.1992
(51) Int. Cl.: H01M 4/28, H01M 4/29, H01M 4/32

(54) **Process for obtaining electrodes for alkaline batteries**
Verfahren zur Herstellung von Elektroden für alkalische Batterien
Procédé de fabrication d'électrodes pour des accumulateurs alcalins

(30) Priority: 17.12.1991 ES 9102802
(43) Date of publication of application: 23.06.1993
(73) Proprietor: SOCIEDAD ESPANOLA DEL ACUMULADOR TUDOR, S.A., E-28027 Madrid (ES)
(72) Inventor: Soria Garcia Ramos, Maria Luisa, E-28033 Madrid (ES); Trinidad Lopez, Francisco, E-28804 Madrid (ES); Lopez-Doriga Lopez-Doriga, Juan Antonio, E-28003 Madrid (ES)
(74) Representative: Gomez-Acebo y Pombo, José Miguel

(56) References cited:
- EP-A- 0 348 699
- GB-A- 1 538 648
- US-A- 3 214 355
- US-A- 3 585 119

## Description

### FIELD OF THE INVENTION

This invention refers to a method for obtaining electrodes for rechargeable alkaline batteries by means of the impregnation in several steps of high porosity nickel, fibre substrates.

### STATE OF THE ART

The galvanic cells such as nickel/cadmium are known since the end of last century. Generally these cells are made up of a rechargeable cadmium anode, a nickel oxide cathode and an alkaline electrolyte such as a potassium hydroxide aqueous solution.

For applications in which high current charging and discharging peaks are demanded, nickel/cadmium cells are mainly employed with an electrode support that is a nickel plated steel perforated sheet on which nickel powder is sintered, obtaining a high porosity structure that is impregnated subsequently chemical or electrochemically with the active material. This technology shows the advantages of great active surface on the electrodes and so a minimum electrical resistance. However, the small pore size makes the impregnating process and washing of the electrodes difficult and expensive, and they usually must be done in many cycles of several steps.

In order to overcome the foregoing disadvantages of these type of electrodes, keeping their excellent performance in high current applications, over the past years, many electrode substrates composed of nickel non-woven fibres, or metallic or nickel plated natural or synthetic fibres, or of nickel plated polymeric material foams, such as those described in the German patent 2.251.160 and 2.418.742, in the French patent 2.472.842 and 80.11080 and in the American patent 4.312.670 among others, have been developed. The obtention of electrodes for alkaline galvanic cells has been carried out by chemical or electrochemical impregnation of these substrates or by mechanical spreading of the active materials (vibration, pasting, etc) over the same. These processes have been the purpose of many patents of invention, such as the American patent 3.214.355 (the first about electrochemical impregnation), and about mechanical methods the european patents 0.129.627, 0.273.212 and 0.348.699, among others.

The use of mechanical methods such as pasting requires the utilization of high porosity substrates (90-95%) and, therefore, with a lower nickel content so, the performance of the electrode obtained in this way at high current charges and discharges is lower than with the electrodes obtained by other methods. However, these mechanical methods present the advantages of a lower cost, simpler facilities and removing toxic waste. On the other hand, the electrochemically impregnated electrodes show excellent performance at high current discharges and at cycle-life because of the better adherence between active material and substrate and the utilization of substrates with a lower porosity (80-90%).

In this invention a combined process that presents the advantages of the methods cited before is described: active material efficiency, high current discharge performance and cost.

### ADVANTAGES OF THE INVENTION

With this invention it is claimed to get the advantages of the two groups of processes of electrode impregnation with non-woven fibre support or nickel foams or other nickel plated polymeric or metallic materials described before, avoiding, in some degree, their disadvantages. On the other hand, an automatic continuous method is described, which is made up of a set of steps that allows the obtention of electrodes ready for cell assembling.

### DETAILED DESCRIPTION OF THE INVENTION

In this invention, the nickel fibre substrate impregnation to obtain electrodes for alkaline rechargable batteries takes place in two main phases: the former is a mechanical phase and the latter is an electrochemical one. In the mechanical impregnation the substrate is loaded with about 20-50% of the active material by spraying or immersion in a suspension that is maintained by mechanical agitation. For the suspension preparation, metallic oxides and hydroxides of little particle size, around 10 µm are needed, such as nickel hydroxide and cadmium oxide for the positive and negative electrodes respectively of the nickel/cadmium bakeries. Furthermore, the suspension contains natural or semisynthetic polysaccharide additives such as gum arabic among the former and carboxymethylcellulose, ethylcellulose or hydroxypropylmethylcellulose among the latter in a concentration of 0.5-1%. Water, ethyl or isopropyl alcohol or water-alcohol mixtures at variable proportions are used as suspension agent.

The electrochemical impregnation is carried out by means of cathodic polarization of the nickel porous substrate, previously mechanically impregated, in an aqueous solution of a metallic salt such as nickel or cadmium salt which contains a reducible anion such as nitrate, permanganate, chlorate or chromate, whose redox potential is more positive than that of the metallic cations present such as nickel or cadmium and, consequently, in the cathode the reduction of those takes place. Mainly solutions of nickel nitrate of concentration 3-6 M that contain around 1-10% of cobalt nitrate, preferably 3-5% in positive plate, and of cadmium nitrate 3-6 M in negative plate, with a pH 3-5 in both cases are used. The solution is maintained at 35-60°C by means of a cooling system by electrolyte recirculation.

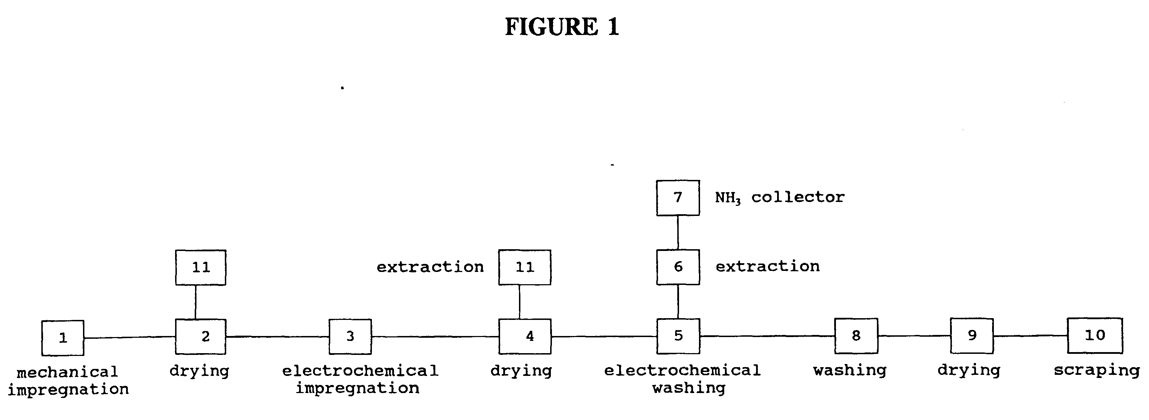

In Figure 1, the arrangement of the element that make up the automatic continuous facility for electrode preparation is graphically represented. The substrate is composed of nickel fibres, high nickel content alloys, nickel plated metallic or polymeric fibers or other nickel plated porous plastic materials and has a porosity between 80-95%, preferably 82-90%. The average diameter of the fibres is 15-25 µm. Previously to the impregnation, the chosen substrate is cut to the suitable size for the application and a nickel or nickel plated steel lug is welded. By means of the lug the substrate is connected to a mobil metallic device whose speed can be modified in order to be fitted to the substrate type, electrode size and the final application. Once connected, the substrate is submerged in the suspension (1) for 10-30 seconds for the mechanical impregnation, dried by means of hot air at 40-60°C for 3-5 minutes in the area (2) and then submerged in the bath (3) which contains the nickel or cadmium nitrate solution, in which it is cathodically polarized with a current density of 5-35 A/dm for 5-40 minutes, preferably 10-35 A/dm for 5-20 minutes. Nickel or cadmium foils are used as anodes depending on which electrodes, positive or negative, are obtained. After a second drying area (4) with hot air at 40-50°C for 3-5 minutes, the impregnated plates are electrochemically washed by the cathodic polarization of the electrodes in a sodium or potassium hydroxide solution (5) with a specific gravity of 1.10-1.20 g/cm³ and that is at 40-50°C, with a current density of 3-15 A/dm for 5-30 minutes. The conditions are fitted to each electrode size, substrate type and final application of the electrodes. In this point, there is a gas extraction device (6) and a collector (7) for the ammonia generated during the electrochemical washing of the electrodes. Then, the electrodes are submerged in a bath (8) with distilled water for washing at 40°C for 5-8 minutes and are dried in (9) with hot air at 40-50°C for 3-5 minutes. Finally, in the area (10) a mechanical scraping of the electrodes is carried out to remove the active material that is in the outside of the same. The facility has, besides, a gas extraction device (11) in all the drying and impregnating areas as it is showed in the Figure 1 annexed.

### EXAMPLES

1) A group of electrodes was prepared by welding nickel lugs to 100 cm pieces of non-woven nickel fiber substrate, 85% porosity and 1.5 mm thickness and then they were connected to the continuous impregnating line. Through immersion for 15 seconds in a nickel hydroxide suspension which contained 0.65% carboxymethylcellulose and, then, drying the electrodes for 5 minutes in hot air at 50°C, a 0.05 g/cm load of active material was got in this first step. Afterwards, the electrodes were submerged in a 4.5 M nickel nitrate solution which contained 5% cobalt nitrate and had a pH 3.5 approximately at 40°C. In this bath, the electrodes were cathodically polarized for 25 minutes at a current density of 8 A/dm. Nickel foils were employed as anodes. After drying with hot air at 50°C for 5 minutes, the electrodes were submerged in a 10% sodium hydroxide solution at 40°C and were cathodically polarized for 12 minutes at 8 A/dm, using nickel foils as anodes. After washing with distilled water at 40°C for 7 minutes, the electrodes were dried in a hot air current at 50°C for 5 minutes and finally suffered a mechanical scraping. The final load with active material of the nickel hydroxide electrodes was 0.20 g/cm, equal to 1.6 g/cm³ void volume and to an approximated capacity of 40 mAh/cm of electrode.
2) In a similar way, a group of non-woven nickel fiber substrate pieces was prepared with 100 cm surface, 88% porosity and thickness 1.5 mm and they were connected to the continuous impregnating line. Through immersion for 25 seconds in a cadmium oxide suspension in ethyl alcohol and drying the electrodes in hot air at 40°C for 4 minutes, a load of the substrate with active material of 0. 10 g/cm was got in this first step. Then, the electrodes were submerged in a 4 M cadmium nitrate solution with a pH 3 approximately at 40°C. In this bath the electrodes were cathodically polarized for 10 minutes with a current density of 12 A/dm. Cadmium foils were employed as anodes. After drying in hot air at 50°C for 5 minutes, the electrodes were submerged in a 10% sodium hydroxide solution at 40°C and were cathodically polarized for 8 minutes at 12 A/dm, using nickel foils as anodes. After washing with distilled water at 40°C for 7 minutes, they were dried in a hot air current at 50°C for 5 minutes and finally suffered a mechanical scraping. The final load with active material of the cadmium electrodes was 0.24 g/cm, equal to 1.8 g/cm³ void volume and an approximated capacity of 55 mAh/cm of electrode.

## Claims

1. Continuous process for obtaining electrodes for alkaline galvanic cells from high porosity nickel substrates with non-woven fibre or open-cell foam structures, and composed of nickel, alloys with a very high nickel content, nickel plated metallic materials nickel plated steel or nickel plated natural or synthetic polymeric materials, characterized in that the substrate, to which a nickel or nickel plated steel lug has been previously welded, is connected to an automatic continuous impregnating line in which it passes through the following consecutive steps: mechanical impregnation by spraying or immersion in a suspension of metallic oxides and hydroxides with a particle size around 10 µm, further containing natural or semisynthetic polysaccharide additives, thereby loading the substrate with about 20-50 % of active material, drying, electrochemical impregnation by means of cathodic polarization in an aqueous solution of a metallic salt which contains a reducible anion whose redox potential is more positive than that of the metallic cation present, drying, electrochemical washing by cathodic polarization in a sodium or potassium hydroxide solution, distilled water washing, drying and mechanical scraping.

2. Process according to claim 1, characterized in that for obtaining positive electrodes for nickel/cadmium alkaline galvanic cells, the mechanical impregnating suspension contains as an active material nickel hydroxide with a particle size around 10 µm and natural or semisynthetic polysaccharide additives such as gum arabic, carboxymethylcellulose, ethylcellulose or hydroxipropylmethylcellulose in a concentration of 0.5-1% and suspension agents such as water, ethyl or isopropyl alcohol or water-alcohol mixtures at variable ratios; and the electrochemical impregnation is performed by cathodic polarization at 5-35 A/dm for 5-40 minutes, preferably 10-35 A/dm for 5-20, minutes of the substrate, previously impregnated mechanically with a load of 20-50% of the active material, in a 3-6 M nickel nitrate solution which, besides, contains sodium nitrite and 1-10% cobalt nitrate, preferably 3-5% regarding to nickel nitrate, with a pH 3-5 and at 35-60°C.

3. Process according to claim 1, characterized because for obtaining negative electrodes for nickel/cadmium alkaline galvanic cells, the mechanical impregnating suspension contains cadmium oxide with a particle size around 10 µm and the same polysaccharide additives mentioned in claim 2, and suspension agents such as water, ethyl or isopropyl alcohol or water-alcohol mixtures at variable ratios; and the electrochemical impregnation is performed by cathodic polarization at 5-35 A/dm for 5-40 minutes, preferably at 10-35 A/dm for 5-20 minutes, in a 3-6 M cadmium nitrate solution with a pH 3-5 and at 35-60°C.

## Patentansprüche

1. Durchlaufendes Verfahren zur Erhaltung von Elektroden für galvanische Zelle ausgehend von Nickelsubstraten hohere Porosität mit Strukturen aus ungeflochten Fasern oder Schaüme in offene Zelle und aus Nickel, sehr hohen Nickelgehaltenden Legierungen, vernickelten metallischen Werkstoffen, vernickelten Stähle oder natürlichen bzw. polymerischen Werkstoffen, dadurch gekennzeichnet, daß das Substrat, an dem vorher eine Nickel- oder vernickelte Stahlklemme geschweißt worden ist, an einer automatische, durchlaufende Impregnierungslinie angeschlossen wird, bei der es die nachstehenden, aufeinanderfolgenden Abschnitten durchläuft: mechanische Impregnierung durch Bespritzen oder Eintauchen, in einer Suspension aus metallische oxyde und Hydroxide mit Teilchengrössen ca. 10 µm, die ausserdem Zusatzmitteln aus natürlichen oder halbsynthetischen Polysacchariden enthält, wobei das Substrat auf diese Weise mit etwa 20 bis 50% des getrockenes, wirksames Werkstoffes geladen wird; Austrocknen, elektrochemische Impregnierung mittels kathodische Polarisierung in einer wässerige Lösung eines metallischen Salzes die ein Anion enhält das sich Reduzieren lässt, dessen Potential redox mehr Positiv ist als dies vom aufwessenden metallischen Kation; Austrocknen, elektrochemisches Wässern durch katodische Polarisierung in einer Lösung aus Natrium- oder Kaliumhydroxid; Wässern im destilliertes Wasser, Austrocknen und mechanisches Kratzen.

2. Verfahren nach Anspruch 1, dadurch gekennzeichnet, daß, um die positiven Elektroden für die galvanische, alkalische Zellen aus Nickel/Kadmium zu erhalten, die Suspension für die mechanische Impregnierung, als wirksames'Werkstoffes Natriunhydroxid mit einer Teilchengrösse etwa 10 µm, und Zusatzmitteln aus natürlichen oder halbsynthetischen Polysacchariden wie Arabisches Gummi, Carboxymethylcellulose, Aethilcellulose oder Hydroxipropylmethilcellulose in einer 0,5 bis 1%-Konzentration, und Suspensionagens wie Wasser, Äthyl-, bzw Isopropylalcohol, oder in Mischungen von Wasser und Alkohol in verschiedenen Verhältnisse enthält; und daß die elektrochemische Impregnierung durch kathodische Polarisierung des Substrats von 5 bis 35 A/dm während 5 bis 40 min durchgeführt wird, vorzugweise von 10 bis 35 A/dm während 5 bis 20 min, dieses vorimpregniert aus mechanische Weise mit einer Ladung von 20 bis 50% wirksames Werkstoffes in einer Nickelnitratlösung von 3 M bis 6 M, die ausserdem Natrium-und Kobaltnitrat von 1 bis 10% enhält, vorzugsweise von 3 bis 5% in Verhältnis zum Nickelnitrat, mit pH von 3 bis 5, und von 35 zu 60°C.

3. Verfahren nach Anspruch 1, dadurch gekennzeichnet, dass, um die negativen Elektroden für die galvanische, alkalische Zellen aus Nickel/Kadmium zu erhalten, die Suspension für die mechanische Impregnierung Kadmiumoxid mit einer Teilchengrösse etwa 10 µm, und dieselbe im Anspruch 2 vorgenannten Zusatzmitteln aus Polysacchariden und Suspensionagens wie Wasser, Äthylal-, bzw Isopropylalcohol, oder Mischungen von Wasser und Alkohol in verschiedenen Verhältnisse enthält; und daß die elektrochemische Impregnierung durch kathodische Polarisierung von 5 bis 35 A/dm während 5 bis 40 min durchgeführt wird, vorzugweise von 10 bis 35 A/dm während 5 bis 20 min, in einer Kadmiumnitratlösung von 3 M bis 6 M, mit pH von 3 bis 5, und von 35 zu 60°C.

## Revendications

1. Procédé continu pour l'obtention d'électrodes pour cellules galvaniques à partir de substrats de nickel à porosité élevée avec structures de fibre non tressées ou mousses dans cellule ouverte, et composés de nickel, d'alliages ayant un contenu très élevé en nickel, de matériaux métalliques nickelés, d'acier nickelé ou de matériaux polymériques naturels ou synthétiques nickelés, caractérisé par le fait que le substrat, auquel on a auparavant soudé une borne de nickel ou d'acier nickelé, est relié à une ligne d'imprégnation continue automatique dans laquelle il passe au moyen des étapes consécutives suivantes : imprégnation mécanique par arrosage ou immersion, dans une suspension d'oxydes et d'hydroxydes métalliques dont la taille de la particule est d'environ 10 µm, contenant de plus des additifs de polysaccharides naturels ou semi-synthétiques, chargeant ainsi le substrat de 20 à 50% de matériau actif, séchage, imprégnation électro-chimique au moyen de polarisation cathodique dans une solution acqueuse d'un sel métallique contenant un anion réductible dont le potentiel d'oxydoréduction est plus positif que celui du cation métallique présent, séchage, lavage électro-chimique par polarisation cathodique dans une solution de sodium ou de potassium, lavage en eau distillée, séchage et grattage mécanique.

2. Procédé conforme à la revendication 1, caractérisé par le fait que, pour l'obtention d'électrodes positives pour les cellules galvaniques alcalines de nickel/cadmium, la suspension d'imprégnation mécanique contient comme matériau actif de l'hydroxyde de nickel dont la taille de la particule est d'environ 10 µm et des additifs de polysaccharides naturels ou semi-synthétiques comme la gomme arabique, la carboxyméthylcellulose, l'éthylcellulose ou l'hydroxypropylméthylcellulose dans une concentration entre 0,5 et 1% et des agents en suspension comme l'eau, l'alcool éthylique ou
isopropylique ou des mélanges d'eau et d'alcool dans des proportions diverses. L'imprégnation électro-mécanique se fait par polarisation cathodique du susbstrat de 5 à 35 A/dm pendant 5 à 40 minutes, de préférence de 10 à 35 A/dm pendant 5 à 20 minutes, préalablement imprégné de façon mécanique d'une charge de 20 à 50% de matériau actif dans une solution de nitrate de nickel de 3 M à 6 M laquelle contient de plus, du nitrate de sodium et du nitrate de cobalt entre 1 et 10%, de préférence entre 3 et 5% par rapport au nitrate de nickel, avec un pH entre 3 et 5 et une température entre 35 et 60° C.

3. Procédé conforme à la revendication 1, caractérisé par le fait que pour l'obtention des électrodes négatives pour les cellules galvaniques de nickel/cadmium, la suspension d'imprégnation mécanique contient de l'oxyde de cadmium dont la taille de particule est d'environ 10 µm et les mêmes additifs de polysaccahrides cités à la revendication 2 et des agents de suspension comme l'eau, l'alcool éthylique ou isopropylique ou des mélanges d'eau et d'alcool dans des proportions diverses. L'imprégnationélectro-chimique se fait par polarisation cathodique de 5 à 35 A/dm pendant 5 à 40 minutes, de préférence de 10 à 35 A/dm pendant 5 à 20 minutes, dans une solution de nitrate de cadmium de 3 M à 6 M avec un pH entre 3 et 5 et une température entre 35 et 60°C.
